# EUROPÄISCHE PATENTSCHRIFT

(11) **EP 3 023 278 B1**
(45) Veröffentlichungstag und Bekanntmachung des Hinweises auf die Patenterteilung: **01.01.2020**
(21) Anmeldenummer: 15194962.5
(22) Anmeldetag: 17.11.2015
(51) Int. Cl.: B60J 10/21, B60J 10/24, B60J 10/80

(54) **DICHTUNGSELEMENT MIT SPRITZGUSSFORMTEIL**
SEALING ELEMENT WITH INJECTION MOLDED ARTICLE
ÉLEMENT D'ETANCHEITE COMPRENANT UNE PIECE MOULEE PAR INJECTION

(30) Priorität: 24.11.2014 DE 102014117123
(43) Veröffentlichungstag der Anmeldung: 25.05.2016
(73) Patentinhaber: CQLT SaarGummi Technologies S.à.r.l., 5544 Remich (LU)
(72) Erfinder: Samanci, Suleyman, 66687 Wadern (DE); Röder, Thomas, 66679 Losheim am See (DE)
(74) Vertreter: Patentanwälte Bernhardt / Wolff Partnerschaft mbB

(56) Entgegenhaltungen:
- JP-A- 2012 116 338
- JP-U- H0 226 933
- JP-U- H0 416 023
- US-A- 4 255 903
- US-A- 5 222 336
- US-A- 5 258 157

## Beschreibung

Die Erfindung betrifft ein Dichtungselement zur Bildung einer Dichtung, insbesondere an Türen oder Klappen einer Fahrzeugkarosserie, das ein aus Elastomer- oder/und Thermoplastmaterial durch Spritzgießen hergestelltes Formteil mit einem schlauchförmigen Abschnitt und einer Entformungsöffnung, die einen sich in Längs- oder/und Querrichtung des Abschnitts erstreckenden Schlitz aufweist, sowie nach Entfernung des Formteils ein Auseinanderklaffen des Entformungsschlitzes verhindernde Einrichtungen umfasst.

Bei bekannten Dichtungen mit einem Spritzgussteil bildet dieses z.B. einen Eckenabschnitt einer Dichtung an einer Fahrzeugtür, wobei der Eckenabschnitt an zwei zueinander im Winkel stehende extrudierte Strangabschnitte angespritzt ist. Diese Strangabschnitte erschweren nach dem Spritzgießen des Formteils dessen Entformung. Insbesondere ließe sich ein den schlauchförmigen Abschnitt innenseitig formender Kernteil des Spritzgießwerkzeugs kaum entfernen, wenn nicht der Entformungsschlitz vorgesehen wäre.

Um ein Auseinanderklaffen des Entformungsschlitzes nach der Entformung des Formteils zu verhindern, werden die einander gegenüberliegenden Längsränder des Entformungsschlitzes in einem aufwendigen Verfahren miteinander verklebt.

Dichtungselemente der eingangs genannten Art gehen aus US 5258157, JP H02 26933 U und JP H04 16023 U hervor. Der Entformungsschlitz dieser bekannten Dichtungsstränge weist als ein Auseinanderklaffen verhindernde Einrichtungen einander unter Verhakung überlappende Lösungsränder auf.

Der Erfindung liegt die Aufgabe zugrunde, ein neues Dichtungselement der eingangs erwähnten Art zu schaffen, dessen Entformungsschlitz sich mit geringem Aufwand ohne Verklebung dauerhaft zusammenhalten lässt.

Dass diese Aufgabe lösende Dichtungselement nach der Erfindung ist dadurch gekennzeichnet, dass die Einrichtungen den Schlitz übergreifende Verbindungsstränge umfassen, und dass die Verbindungsstränge zum Eingreifen jeweils in Ausnehmungen auf wenigstens einer Seite des Entformungsschlitzes vorgesehen und zu wenigstens einem Strangende hin aufgeweitet sind und die Ausnehmungen entsprechend der Aufweitung verbreitert sind.

Vorzugsweise handelt es sich um Einrichtungen, die den Entformungsschlitz durch Formschluss zusammenhalten.

Zweckmäßig sind die Entformungsschlitz übergreifenden Verbindungsstränge dazu vorgesehen, den Entformungsschlitz z.B. in der Art der Naht einer Schnittwunde zusammenzuhalten.

Vorzugsweise handelt es sich bei diesen Verbindungssträngen um im Querschnitt flache Laschen, die in Schlitzlängsrichtung im Abstand zueinander angeordnet sind.

Die Verbindungsstränge werden zweckmäßig bei der Herstellung des Formteils durch Spritzgießen einstückig angespritzt und lassen sich aus einer herstellungsbedingten Position durch Abbiegen in ihre Verbindungsstellung überführen.

Die Verbindungsstränge können alternativ von dem Formteil getrennt hergestellt werden, ggf. in einem dem Spritzgießen des Formteils vorgeordneten Spritzvorgang.

Während die Verbindungsstränge sich z.B. abwechselnd mal von einem und mal vom anderen Längsrand des Entformungsschlitzes erstrecken können, sind sie in einer bevorzugten Ausführungsform der Erfindung sämtlich an einem der einander gegenüberliegenden Längsränder des Entformungsschlitzes angebracht.

Die Ausnehmung kann entsprechend der Aufweitung verbreitert sein, um eine formschlüssige Verbindung herzustellen.

Insbesondere sind die Verbindungsstränge in ihrer Verbindungsstellung einrastbar, wobei zum Einrasten eine Nut-/Federanordnung oder/und eine Zapfen-/Lochanordnung vorgesehen sein kann.

In weiterer Ausgestaltung der Erfindung ist der Entformungsschlitz zu einem zur Auflage auf einem Dichtungssitz vorgesehenen Wandabschnitt hin geöffnet.

Vorzugsweise schließen die in die Ausnehmungen eingreifenden Verbindungsstränge bündig mit der Außenoberfläche des Wandabschnitts ab.

In einer weiteren bevorzugten Ausführungsform ist das Formteil aus einem thermoplastischen Elastomer hergestellt, während extrudierte Strangabschnitte, an die das Formteil angespritzt ist, aus EPDM bestehen.

Als Material für das Formteil oder/und die Strangabschnitte kommen auch Thermoplaste in Betracht.

Die Erfindung wird nachfolgend anhand eines Ausführungsbeispiels und der beiliegenden, sich auf dieses Ausführungsbeispiel beziehenden Zeichnungen weiter erläutert. Es zeigen:
- Fig. 1: einen Abschnitt eines Dichtungselements nach der Erfindung mit einem Entformungsschlitz,
- Fig. 2: den Abschnitt von Fig. 1 bei verschlossenem Entformungsschlitz,
- Fig. 3: ein Querschnitt des Dichtungsstrangs von Fig. 1 und 2 bei offenem Entformungsschlitz, und
- Fig. 4: den Querschnitt von Fig. 3 bei geschlossenem Entformungsschlitz.

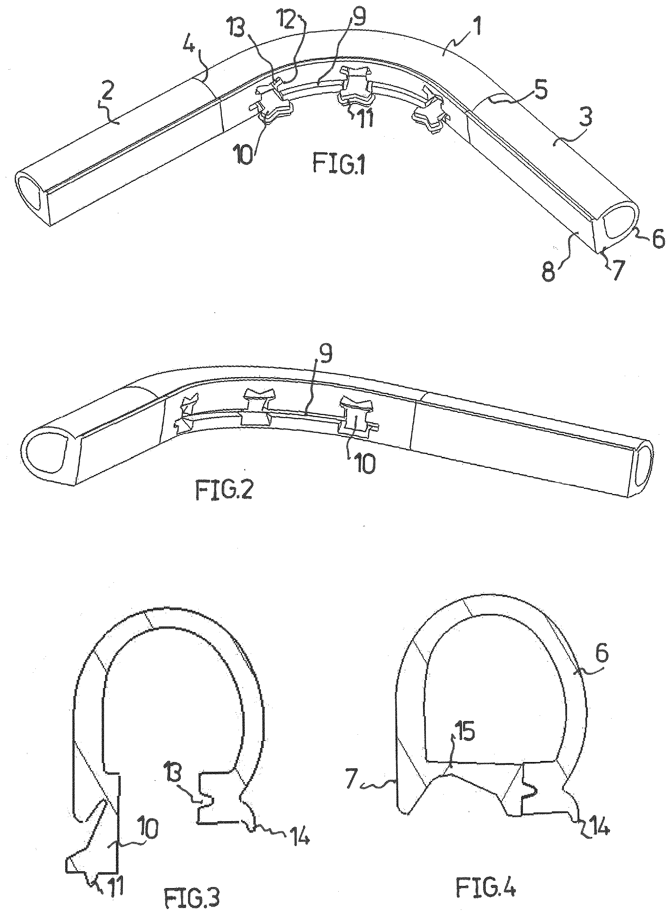

Ein in den Figuren 1 und 2 abschnittsweise dargestelltes Dichtungselement zur Bildung einer Dichtung an einer Fahrzeugtür umfasst ein gebogenes, durch Spritzgießen hergestelltes Formteil 1 aus einem thermoplastischen Elastomer sowie durch Extrusion aus EPDM hergestellte Abschnitte 2 und 3, an die das Formteil 1 bei 4 und 5 angespritzt ist. Das gebogene Formteil 1 bildet einen Eckenabschnitt des Dichtungselements. Sein Querschnitt stimmt im Wesentlichen mit den Querschnitten der Abschnitte 2 und 3 überein.

Das Dichtungselement umfasst einen schlauchartigen Dichtungsabschnitt 6, der in einen Befestigungsabschnitt 7 übergeht. Der Befestigungsabschnitt 7 weist eine der Verklebung mit einem Dichtungssitz an der Fahrzeugtür vorgesehene Fläche 8 auf.

In dem Befestigungsabschnitt 7 ist im Bereich des Formteils 1 ein sich zu der Fläche 8 hin öffnender Entformungsschlitz 9 gebildet. Durch diesen Entformungsschlitz 9 hindurch lässt sich ein gemäß dem Formteil 1 gebogener Kernteil eines Spritzformwerkzeugs entfernen. Ohne den Entformungsschlitz 9 bliebe der Kernteil durch die Abschnitte 2,3 in dem Formteil 1 eingeschlossen.

An einem der beiden einander gegenüberliegenden Längsränder des Entformungsschlitzes 9 stehen etwa senkrecht zu der Fläche 8 in Schlitzlängsrichtung zueinander im Abstand angeordnete Verbindungslaschen 10 vor, die beim Spritzgießen des Formteils 1 einstückig an das Formteil 1 angespritzt worden sind. Wie Fig. 1 ferner zu entnehmen ist, sind die Verbindungslaschen 10 zum freien Ende hin aufgeweitet. Von einer Randfläche der Verbindungslaschen 10 steht jeweils eine sich in Längsrichtung der Randflächen erstreckende Rastfeder 11 vor.

Den Verbindungslaschen gegenüberliegend sind in einer im Wesentlichen die Fläche 8 bildenden, an den Entformungsschlitz 9 angrenzenden Schlauchwand zu dem Entformungsschlitz 9 hin offene Ausnehmungen 12 gebildet, die sich mit zunehmendem Abstand von dem Entformungsschlitz 9 entsprechend den Aufweitungen der Verbindungslaschen 10 verbreitern. Entlang der an die Ausnehmung angrenzenden Randfläche der Schlauchwand verläuft in deren Längsrichtung eine Rastnut 13.

Eine entlang dem Längsrand der Fläche 8 verlaufende Zunge 14 erleichtert die Verklebung des Dichtungselements mit einem Dichtungssitz und bildet beispielsweise eine Führung für ein doppeltklebendes Klebeband.

Wie insbesondere Fig. 4 erkennen lässt, sind die Verbindungslaschen durch eine bei 15 gebildete Schwachstelle leicht abbiegbar.

Bei der Verarbeitung des Dichtungselements, insbesondere bei der Verklebung und beim Andrücken mit Hilfe einer Rollapplikationseinrichtung, muss verhindert werden, dass der Entformungsschlitz 9 auseinanderklafft. Dem wirken die Verbindungslaschen 10 entgegen, die nach der Entformung, d.h. nach Entfernen des genannten Kernteils, um 90° umgeschwenkt und in die Ausnehmungen 12 eingedrückt werden, wobei die Rastfedern 11 in den Rastnuten 12 einrasten. Die Verbindungslaschen 10 stehen nun einer Verklebung mit dem Dichtungssitz nicht mehr im Wege und verhindern ein Auseinanderklaffen des Entformungsschlitzes.

## Patentansprüche

1. Dichtungselement zur Bildung einer Dichtung, insbesondere an Türen oder Klappen einer Fahrzeugkarosserie, das ein aus Elastomer- oder/und Thermoplastmaterial durch Spritzgießen hergestelltes Formteil (1) mit einem schlauchförmigen Abschnitt (6) und einer Entformungsöffnung, die einen sich in Längs- oder/und Querrichtung des Abschnitts (6) erstreckenden Schlitz (9) aufweist, **gekennzeichnet dadurch dass** das Dichtungselement nach Entformung des Formteils (1) Auseinanderklaffen des Entformungsschlitzes (9) verhindernde Einrichtungen (10,12) aufweist, wobei die Einrichtungen (10,12) den Schlitz (9) übergreifende Verbindungsstränge (10) umfassen, und dass die Verbindungsstränge (10) zum Eingreifen jeweils in Ausnehmungen (12) auf wenigstens einer Seite des Schlitzes (9) vorgesehen und zu wenigstens einem Strangende hin aufgeweitet sind und die Ausnehmungen (12) entsprechend der Aufweitung verbreitert sind.

2. Dichtungselement nach Anspruch 1,
**dadurch gekennzeichnet,**
**dass** die Verbindungsstränge (10) einstückig mit dem Formteil (1) beim Spritzgießen des Formteils (1) oder getrennt von dem Formteil hergestellt sind.

3. Dichtungselement nach Anspruch 1 oder 2,
**dadurch gekennzeichnet,**
**dass** sich die Verbindungsstränge (10) sämtlich von einem der einander gegenüberliegenden Längsränder des Schlitzes (9) erstrecken.

4. Dichtungselement nach einem der Ansprüche 1 bis 3,
**dadurch gekennzeichnet,**
**dass** die Verbindungsstränge als im Querschnitt flache Laschen (10) ausgebildet sind.

5. Dichtungselement nach einem der Ansprüche 1 bis 4,
**dadurch gekennzeichnet,**
**dass** die Einrichtungen (10,12) zum formschlüssigen Zusammenhalten des Entformungsschlitzes (9) vorgesehen sind.

6. Dichtungselement nach einem der Ansprüche 1 bis 5,
**dadurch gekennzeichnet,**
**dass** die Verbindungsstränge (10) in ihrer Verbindungsstellung einrastbar sind.

7. Dichtungselement nach Anspruch 6,
**dadurch gekennzeichnet,**
**dass** zum Einrasten eine Nut-/Federanordnung oder/und eine Zapfen-/Lochanordnung vorgesehen ist.

8. Dichtungselement nach einem der Ansprüche 1 bis 7,
**dadurch gekennzeichnet,**
**dass** die Verbindungsstränge (10) in ihre Verbindungsstellung abbiegbar sind.

9. Dichtungselement nach einem der Ansprüche 1 bis 8,
**dadurch gekennzeichnet,**
**dass** der Entformungsschlitz (9) zu einem zur Auflage auf einem Dichtungssitz vorgesehenen Wandabschnitt (8) hin geöffnet ist.

10. Dichtungselement nach einem der Ansprüche 1 bis 9,
**dadurch gekennzeichnet,**
**dass** das Formteil (1) einen Eckenabschnitt des Dichtungselements bildet.

11. Dichtungselement nach einem der Abschnitte 1 bis 10,
**dadurch gekennzeichnet,**
**dass** das Formteil (1) im Zuge seiner Herstellung an wenigstens einen das Dichtungselement ferner bildenden extrudierten Abschnitt (2,3) angespritzt ist.

12. Dichtungselement nach einem der Ansprüche 1 bis 11,
**dadurch gekennzeichnet,**
**dass** die in die Ausnehmung (12) eingreifenden Verbindungselemente (10) bündig mit einer an die Ausnehmung (12) grenzenden Fläche (8) abschließen.

## Claims

1. Seal element for forming a seal, in particular on doors or flaps of a vehicle body, having a moulded part (1) which is produced from elastomer and/or thermoplastic material by injection moulding and which has a hose-like portion (6) and has a demoulding opening having a slot (9) which extends in a longitudinal and/or transverse direction of the portion (6),
**characterized in that** the seal element has devices (10, 12) which prevent widening of the demoulding slot (9) after demoulding of the moulded part (1), wherein
the devices (10, 12) comprise connection strands (10) which engage over the slot (9), and **in that** the connection strands (10), for engagement in each case into recesses (12), are provided on at least one side of the slot (9) and are widened towards at least one strand end, and the recesses (12) are widened according to the widening.

2. Seal element according to Claim 1,
**characterized**
**in that** the connection strands (10) are produced in one piece with the moulded part (1) during the injection moulding of the moulded part (1), or separately from the moulded part.

3. Seal element according to Claim 1 or 2, **characterized**
**in that** the connection strands (10) all extend from one of the mutually opposite longitudinal edges of the slot (9).

4. Seal element according to one of Claims 1 to 3, **characterized**
**in that** the connection strands are formed as clips (10) which are flat in cross section.

5. Seal element according to one of Claims 1 to 4, **characterized**
**in that** the devices (10, 12) are provided for form-fitting holding-together of the demoulding slot (9).

6. Seal element according to one of Claims 1 to 5, **characterized**
**in that**, in their connection position, the connection strands (10) are able to be latched in.

7. Seal element according to Claim 6, **characterized**
**in that**, for the purpose of latching-in, a tongue/groove arrangement and/or a pin/hole arrangement is provided.

8. Seal element according to one of Claims 1 to 7, **characterized**
**in that**, in their connection position, the connection strands (10) are able to be bent.

9. Seal element according to one of Claims 1 to 8, **characterized**
**in that** the demoulding slot (9) is open towards a wall portion (8) which is provided for support on a seal seat.

10. Seal element according to one of Claims 1 to 9, **characterized**
**in that** the moulded part (1) forms a corner portion of the seal element.

11. Seal element according to one of Claims 1 to 10, **characterized**
**in that** the moulded part (1), during the production thereof, is injection-moulded onto at least one extruded portion (2, 3), which further forms the seal element.

12. Seal element according to one of Claims 1 to 11, **characterized**
**in that** the connection elements (10) engaging into the recess (12) are flush with a surface (8) which is adjacent to the recess (12).

## Revendications

1. Élément d'étanchéité pour la formation d'un joint d'étanchéité, en particulier au niveau de portières ou de capots d'une carrosserie de véhicule, qui présente une pièce moulée (1) fabriquée à partir d'un matériau élastomère et/ou thermoplastique par moulage par injection, présentant une section en forme de tuyau (6) et une ouverture de démoulage, qui présente une fente (9) s'étendant dans la direction longitudinale et/ou transversale de la section (6), **caractérisé en ce que** l'élément d'étanchéité présente des dispositifs (10, 12) empêchant l'écartement de la fente de démoulage (9) après le démoulage de la pièce moulée (1), les dispositifs (10, 12) comprenant des pièces d'assemblage (10) chevauchant la fente (9), et **en ce que** les pièces d'assemblage (10) sont conçues pour venir en prise à chaque fois dans des évidements (12) sur au moins un côté de la fente (9) et sont évasées vers au moins une extrémité de pièce et les évidements (12) sont élargis de manière correspondante à l'évasement.

2. Élément d'étanchéité selon la revendication 1, **caractérisé en ce que** les pièces d'assemblage (10) sont fabriquées d'un seul tenant avec la pièce moulée (1) lors du moulage par injection de la pièce moulée (1) ou fabriquées séparément de la pièce moulée.

3. Élément d'étanchéité selon la revendication 1 ou 2, **caractérisé en ce que** les pièces d'assemblage (10) s'étendent toutes à partir d'un des bords longitudinaux mutuellement opposés de la fente (9).

4. Élément d'étanchéité selon l'une quelconque des revendications 1 à 3, **caractérisé en ce que** les pièces d'assemblage sont conçues sous forme de pattes (10) à section transversale plate.

5. Élément d'étanchéité selon l'une quelconque des revendications 1 à 4, **caractérisé en ce que** les dispositifs (10, 12) sont conçus pour le maintien par complémentarité de forme de la fente de démoulage (9).

6. Élément d'étanchéité selon l'une quelconque des revendications 1 à 5, **caractérisé en ce que** les pièces d'assemblage (10) peuvent être encliquetées dans leur position d'assemblage.

7. Élément d'étanchéité selon la revendication 6, **caractérisé en ce qu'**un agencement à rainure/languette et/ou un agencement à tenon/mortaise permet(tent) l'encliquetage.

8. Élément d'étanchéité selon l'une quelconque des revendications 1 à 7, **caractérisé en ce que** les pièces d'assemblage (10) peuvent être pliées dans leur position d'assemblage.

9. Élément d'étanchéité selon l'une quelconque des revendications 1 à 8, **caractérisé en ce que** la fente de démoulage (9) est ouverte vers une section de paroi (8) destinée à un appui contre un siège d'étanchéité.

10. Élément d'étanchéité selon l'une quelconque des revendications 1 à 9, **caractérisé en ce que** la pièce moulée (1) forme une section de coin de l'élément d'étanchéité.

11. Élément d'étanchéité selon l'une quelconque des revendications 1 à 10, **caractérisé en ce que** la pièce moulée (1) est injectée au cours de sa fabrication sur au moins une section extrudée (2, 3) formant par ailleurs l'élément d'étanchéité.

12. Élément d'étanchéité selon l'une quelconque des revendications 1 à 11, **caractérisé en ce que** les pièces d'assemblage (10) venant en prise dans l'évidement (12) sont affleurantes à une surface (8) adjacente à l'évidement (12).
